# EUROPEAN PATENT SPECIFICATION

(11) **EP 2 026 544 B1**
(45) Date of publication and mention of the grant of the patent: **23.06.2010**
(21) Application number: 07460019.8
(22) Date of filing: 16.08.2007
(51) Int. Cl.: H04M 1/04, B60R 11/02

(54) **A mobile phone holder for mechanical vehicles**
Halterung für ein Mobiltelefon für ein Fahrzeug
Support téléphone mobile pour un véhicule

(43) Date of publication of application: 18.02.2009
(73) Proprietor: BURY Sp. z o.o., 39-300 Mielec (PL)
(72) Inventor: Bury, Henryk, 39-300 Mielec (PL)
(74) Representative: Kaminski, Zbigniew

(56) References cited:
- EP-A- 0 899 162
- US-A1- 2006 183 511

## Description

This invention rotates to a mobile phone holder for mechanical vehicles that is provided with an unlocking mechanism, which pushes the phone out from the holder in an upward direction.

The German utility model No. DE 296 22 275 U1 describes a mobile phone holder, especially for mechanical vehicles, provided with a catch locking the phone inserted into the holder and with a button-type unlocking mechanism to release the catch. Pressing both buttons does not result in pushing the phone out from the holder but in releasing the lock only. An inconvenience of this design is that the holder is suitable only for mobile phones, which have a hole on their rear surface to engage with the catch.

The US patent No. US 6 185 302 B1 describes a mobile phone holder for mechanical vehicles, provided with flexible side buttons with clamps, which hold the phone by both sides and concurrently lock it by means of the catches, which slide into the holes on the phone sides. The catches are released by pressing two side buttons, which release the lock but do make the phone move from its "pressed down" position. A major inconvenience of this solution is that it requires holes on both phone sides.

The US patent No. US 6 085 113 describes a mobile phone holder for mechanical vehicles provided with movable side buttons, which press the phone at its both sides by means of springs. The phone is unlocked by means of a lever mechanism, which draws the buttons aside.

The European patent No. EP 0 899 162 A1 discloses a handset holder for a vehicle, comprising a cradle for carrying the handset and a release mechanism for attaching the cradle to a mount fixed inside the vehicle. The holder has a tongue and groove for guiding the tongue to a position where the cradle and mount become latched.

The US patent application No. US 2006/0183511 A1 discloses a cellular phone holder comprising a main body, a fixed plate longitudinally disposed on the main body and having a teeth-formed end on one side, and an operating element transversally disposed on the main body and having a propping teeth corresponding to teeth of he plate.

A major inconvenience of most known mobile phone holders used in mechanical vehicles and provided with a cavity, into which the phone is inserted downwards, is the difficulty to remove the phone from the holder.

The object of this invention is to provide a mobile phone holder for mechanical vehicles provided with a cavity to accommodate a mobile phone, which allows pushing the phone out and removing it easily by pressing the side buttons.

The object of this invention is achieved by a mobile phone holder, especially for a mechanical vehicle, according to this invention, which is characterized by the pushing-out mechanism comprising a pushing element, which is designed as a plate, at one end of which there is a two-side toothed bar, whereby the two-side toothed bar is adapted to engage with the sprocket wheel sections on each side of the toothed sides of the two-side toothed bar, the sprocket wheel section are mounted rotatably on a guiding plate in the cover and provided with a button at one end, and pins for pushing the phone out from the holder are provided at the other end of the pushing element, wherein the pins are located slideably in holes in the locating base, and the guiding plate is provided with guides for guiding pushing element and connected detachably with the cover.

The pushing-out mechanism is favourably provided with a return spring located between the guiding plate and the pushing element.

The pins, which push out the phone from the holder, according to the invention, are favourably designed as hooks being an integral part of the pushing element.

The guiding plate of the holder is favourably provided with holes into which the sprocket wheel sections may be rotatably mounted and into which the axial pivots of the cover slide, and curved guides used to make the sprocket wheel sections rotate.

The sprocket wheel sections are favorably provided with curved grooves, into which the corresponding pivots of the cover slide to limit the rotation of these sprocket wheel sections.

The pushing element, according to the invention, is favourably provided with a guiding groove, which also limits the movement of the pushing element by a limiting pin protruding from the guiding plate.

The guiding base of the holder, according to the invention, is favourably connected with the cover by means of screws in a detachable manner.

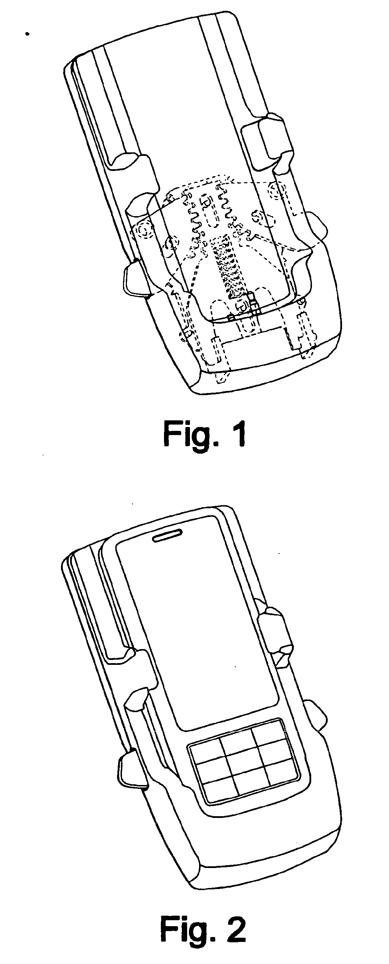

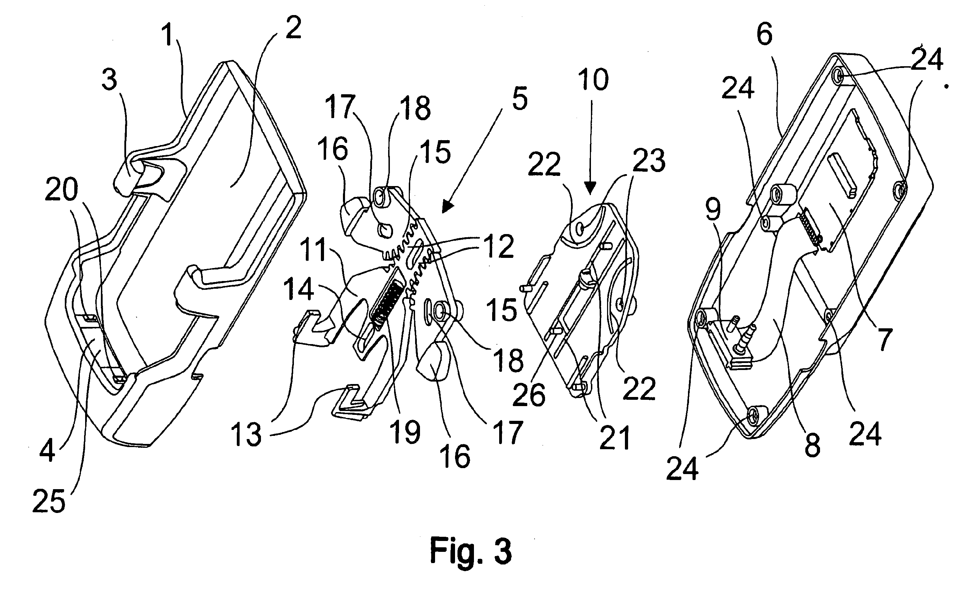

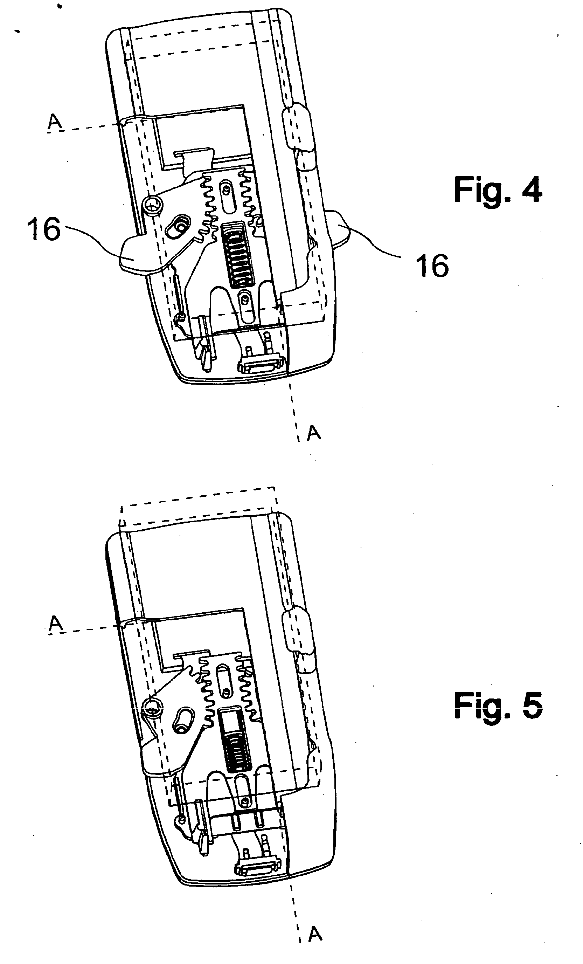

The mobile phone holder for mechanical vehicles, according to the invention, is depicted on the drawings attached. Fig. 1 is a perspective front view of the holder without a mobile phone; Fig. 2 presents a holder with a mobile phone; Fig. 3 is an exploded view of the holder and its particular components; Fig. 4 is a sectional view of the holder with the cover at the A-A axis, with the pushing-out pins inside; Fig. 5 is the same sectional view of the holder with the pushing-out pins outside and the mobile phone pushed out upwards.

The mobile phone according to the invention consists of three units: a cover 1 provided with a cavity 2, which accommodates a mobile phone, with protrusions 3 having guides that allow an upward and downward movement of the phone, and with a locating base 4, a pushing-out mechanism 5 and a base 6, which has a shape of a flat open-top box, provided with an electronic circuit 7, connected to the plugs 9 by means of an elastic tape 8.

The said pushing-out mechanism 5 of the mobile phone holder, according to the invention, comprises the following basic components: a guiding plate 10, connected to the cover 1 by means of screws, a pushing element 11, which is movably mounted to the guiding plate and provided with a two-side toothed bar 12 on its one end and with hooked pushing-out pins 13 and a guiding groove 14. The two-side toothed bar 12 of the pushing element 11 engages with the sprocket wheel sections 15, which are located rotatably in the guiding plate 10 and end with buttons 16 protruding outside. The sprocket wheel sections 15 are also provided with curved grooves 17 that limit the movement of these sections. The sprocket wheel sections 15 are mounted rotatably by means of sleeves 18, in the holes of which axial pivots are located, protruding from the cover 1 and not depicted in the drawing. The pushing-out pins 13 are mounted movably in the holes 20 of the locating base 4 of the cover 1. Between the guiding plate 10 and the pushing element 11 there is a return spring 19, which holds the pushing element 11 in such a position that the pushing-out pins 13 are hidden in the holes 20 of the locating base 4. The pushing element 11 is located between the guiding plate 10 and the cover 1 and is guided by the guides 21 protruding from both the guiding plate 10 and the lower surface of the cover 1. The rotational motion of the sprocket wheel sections 15 is exerted by curved guides 22. The guiding plate 10 is connected to the cover 1 by means of screws, which sit in the holes 23 of the guiding plate 10.

The base 6 is connected to the cover 1 by means of screws located in its sleeves 24. The plugs 9 are mounted in the slot 25 in the locating base 4 of the cover 1 and protrude outside the slot.

The mobile phone holder, according to the invention, is also provided with a cord, not shown on the drawings, which connects it to the vehicle electric system, e.g. a power supply, a hands-free kit or other known devices, to which a mobile phone may be connected.

The mobile phone holder with a pushing-out mechanism, according to the invention, operates as follows:
The mobile phone is inserted into the cavity 2 in the cover 1, and pressed to the locating base 4 of the cover so that the plugs 9 protruding from the locating base enter into the electric connection of the mobile phone. Thanks to an elastic clamp by the side protrusions 3, the phone strays in the cavity 2 ready for operation. To remove the phone from the cavity 2, both side buttons 16 protruding from the holder shall be pressed, which makes the sprocket wheel sections 15, engaging with the two-side toothed bar 12, move the pushing element 11 upwards and, consequently, the pushing-out pins 13 pull out from the holes 20 and the mobile phone is pushed out upwards, which facilitates removing it from the holder. Concurrently, the plugs 9 pull out from the phone connection and the electric connection is terminated. When the buttons 16 are released, the spring 19 makes the pushing element 11 move again to a position where the pushing-out pins are hidden inside the holes 20 in the locating base 4 of the cover 1.

The mobile phone holder for mechanical vehicles, according to the invention, can be mounted in any possible manner to the dashboard or a windshield of the mechanical vehicle.

### References

- 1.: cover
- 2.: cavity
- 3.: protrusion
- 4.: locating base
- 5.: pushing-out mechanism
- 6.: base
- 7.: electronic circuit
- 8.: flexible tape
- 9.: plug
- 10.: guiding plate
- 11.: pushing element
- 12.: two-side toothed bar
- 13.: pushing-out pin
- 14.: guiding groove
- 15.: sprocket wheel section
- 16.: button
- 17.: curved grooves
- 18.: sleeve
- 19.: return spring
- 20.: hole
- 21.: guide
- 22.: curved guide
- 23.: hole
- 24.: sleeve
- 25.: slot

## Claims

1. A mobile phone holder for mechanical vehicles comprising a base (**6**), a cover (**1**) connected to the base (**6**) and provided with a cavity (**2**), into which the mobile phone is inserted, and side protrusions (**3**) with guides to guide the phone and with a locating base (**4**), which has a slot (**25**) for plugs (**9**), and a mechanism, located between the base (**6**) and the cover (**1**), which is adapted to push out the phone from the holder, **characterized in that** the pushing-out mechanism comprises a pushing element (**11**), which is designed as a plate, at one end of which there is a two-side toothed bar (**12**), whereby the two-side toothed bar (**12**) is adapted to engage with the sprocket wheel sections (**15**) on each side of the toothed sides of the two-side toothed bar (**12**), the sprocket wheel sections (**15**) are mounted rotatably on a guiding plate (**10**) in the cover (**1**) and each provided with a button (**16**) at one end, and pins (**13**) for pushing the phone out from the holder are provided at the other end of the pushing element (**11**), wherein the pins are located slideably in holes (**20**) in the locating base (**4**), and the guiding plate (**10**) is provided with guides (**21**) for guiding pushing element (**11**) and connected detachably with the cover (**1**).

2. A holder according to Claim 1, wherein the pushing-out mechanism is provided with a return spring (**19**) located between the guiding plate (**10**) and the pushing element (**11**).

3. A holder according to Claim 1 or Claim 2, wherein the pushing-out pins (**13**) are designed as hooks being an integral part of the pushing element (**11**).

4. A holder according to Claim 1 or Claim 2, or Claim 3, wherein the guiding plate (**10**) of the holder is provided with holes (**23**) into which the sprocket wheel sections (**15**) may be rotatably mounted and into which the axial pivots of the cover (1) slide, and with curved guides (**22**) used to make the sprocket wheel sections (**15**) rotate.

5. A holder according to Claim 1 or Claim 2, or Claim 3, or Claim 4, wherein the sprocket wheel sections (**15**) are provided with curved grooves (**17**), into which the corresponding pivots of the cover (**1**) slide to limit the rotation of these sprocket wheel sections (**15**).

6. A holder according to Claim 1 or Claim 2, or Claim 3, or Claim 4, or Claim 5, wherein the pushing element (**11**) is provided with a guiding groove (**14**), which also limits the movement of the pushing element (**11**) by a limiting pin (**26**) protruding from the guiding plate (**10**).

7. A holder according to Claim 1 or Claim 2, or Claim 3, or Claim 4, or Claim 5, or Claim 6, wherein the guiding plate (**10**) is connected with the cover (**1**) by means of screws in a detachable manner.

## Patentansprüche

1. Kraftfahrzeug-Handyhalter zusammengesetzt aus einem Gestell (6) und einem mit diesem Gestell verbundenen Deckel (1), wobei der Deckel mit einer Vertiefung (2) zum Aufsetzen von oben in diese Vertiefung des Handys und mit Seitenvorsprüngen (3) mit Führungen zum Führen dieses Handys ausgestattet ist, und auch mit einem Stützboden (4) mit einer Steckdose (25) für Einspeisestecker (9) und mit einem zwischen dem Gestell (6) dem Deckel (1) angeordneten Mechanismus zum Herausrücken des Handys aus dem Handyhalter, **gekennzeichnet dadurch, dass** sein Herausrücken- Mechanismus (5) einen Rücker (11) in Gestalt einer Platte aufweist, an deren einem End eine beidseitige Zahnstange (12) zur Zusammenarbeit von beiden Seiten mit den Zahnräder- Segmenten (15) sich befindet, wobei die Zahnrädersegmente (15) drehbar in der Führungsplatte (10) des Deckels (1) angeordnet sind und an einem ihrer Enden einen Druckknopf (16) aufweisen und die Bolzen (13) zum Herausrücken des Handys aus dem Halter am zweiten Ende des Rückers (11) sich befinden und in den Löchern (20) des Stützbodens (4) verschiebbar eingesetzt sind und die Führungsplatte (10) mit den Führungen (21) zum Führen des Rückers (11) ausgestattet und mit dem Deckel (1) trennbar verbunden ist.

2. Der Halter nach dem Anspruch 1 **gekennzeichnet dadurch, dass** sein Mechanismus zum Herausrücken des Handys mit einer zwischen der Führungsplatte (10) und dem Rücker (11) angeordneten Stützfeder (19) ausgestattet ist.

3. Der Halter nach dem Anspruch 1 oder 2 **gekennzeichnet dadurch, dass** seine Bolzen (13) die Gestalt von den ein einheitliches Ganzes mit dem Rücker (11) bildenden Haken hat.

4. Der Halter nach dem Anspruch 1 oder 2 oder 3 **gekennzeichnet dadurch, dass** seine Führungsplatte (10) Löcher (23) zum drehbaren Einsetzen von Zahnräder- Segmenten (15), in welche die Spurzapfen des Deckels (1) hineinragen, und Bogenführungen (22) zum Führen der drehbaren Bewegung dieser Zahnräder-Segmenten (15) aufweist.

5. Der Halter nach dem Anspruch 1 oder 2 oder 3 oder 4 **gekennzeichnet dadurch, dass** seine Zahnräder- Segmente (15) Bogenrillen (17), in welche entsprechende Zapfen des Gestelles (1) zum Beschränken der drehbaren Bewegung dieser Zahnräder- Segmente (15) hineinragen, aufweist.

6. Der Halter nach dem Anspruch 1 oder 2 oder 3 oder 4 oder 5 **gekennzeichnet dadurch, dass** sein Rücker (11) mit einer Führungsrille (14) zur Beschränkung der Bewegung dieses Rückers mittels eines aus der Führungsplatte (10) herausragenden Beschränkungsbolzens (26) ausgestattet ist.

7. Der Halter nach dem Anspruch 1 oder 2 oder 3 oder 4 oder 5 oder 6 **gekennzeichnet dadurch, dass** sein Führungsplatte (10) trennbar mit dem Deckel (1) mittels von Schrauben verbunden ist.

## Revendications

1. Le portant d'un téléphone portable pour les véhicules mécaniques, composé d'un support (6) et d'un couvercle joint avec lui, (1), qui a une cavité (2) pour y mettre un téléphone de haut et dans les saillies latéralles (3) avec des glissières à pousser ce téléphone, aussi avec un fond de soutien (4) éuipé d'une prise (25) aux fiches alimentant (9) et avec un mécanisme, placé entre le support (6) et le couvercle (1), adapté à tirer le téléphone portable du portant, **caractérisé par le fait que** son mécanisme tirant (5) se compose d'un pousseur (11), sous la forme d'une plaque dont l'un bout et muni d'une crémaillère bilatérale (12) adaptée au coofonctionnement, de deux côtés, avec des décupures des roues dentées (15), et les décupures (15) installées, de la manière tournante, en plaque guidant (10), dans le couvercle (1), et équipées d'un bouton (16) sur l'un de ses bouts, et les broches (13) à pousser le téléphone du portant se trouvent au deuxième bout du pousseur (11) et sont fixées, de la manière glissante, dans les troux (20) du fond de soutien du couvercle (4) et la plaque guidant (10) est munie des glissières (21) pour guider le pousseur (11) et liée séparément avec le couvercle (1).

2. Le portant, selon la revendication 1, **caractérisé par le fait que** son mécanisme tirant le téléphone portable est équipé d'un ressort de soutien (19) monté entre la plaque guidant (10) et le pousseur (11).

3. Le portant, selon la revendication 1 ou 2, **caractérisé par le fait que** ses broches poussant (13) ont une forme des crochets constituant un ensemble avec le pousseur (11).

4. Le portant, selon la revendication 1 ou 2 ou 3, **caractérisé par le fait que** sa plaque guidant (10) est équipé des éléments servant à une fixation rotative des décupures des roues dentées (15) dans les troux (23) dans lesquels entrent des pivots axiaux du couvercle (1) et des glissières arquées (22) servant à faire un mouvement rotatif de ces décupures des roues dentées (15).

5. Le portant, selon la revendication 1 ou 2 ou 3 ou 4, **caractérisé par le fait que** ses décupures des roues dentées (15) ont des rainures arquées (17) qui entrent dans les pivots du support (1) servant à réduire un mouvement rotatif de ces décupures (15).

6. Le portant, selon la revendication 1 ou 2 ou 3 ou 4 ou 5, **caractérisé par le fait que** le pousseur (11) a une rainure guidant (14) servant en plus à réduire un mouvement du pousseur, à l'aide d'une broche limiteur (26) saillant de la plaque guidant (10).

7. Le portant, selon la revendication 1 ou 2 ou 3 ou 4 ou 5 ou 6, **caractérisé par le fait que** la plaque guidant (10) est jointe séparément, à l'aide des vis, avec le couvercle (1).
